# EUROPÄISCHE PATENTANMELDUNG

(11) **EP 4 760 139 A1**
(43) Veröffentlichungstag der Anmeldung: **17.06.2026**
(21) Anmeldenummer: 25218547.5
(22) Anmeldetag: 26.11.2025
(51) Int. Cl.: F16P 3/14

(54) **ÜBERWACHUNGSEINRICHTUNG**

(30) Priorität: 12.12.2024 DE 202024107200 U
(71) Anmelder: Leuze electronic GmbH + Co. KG, 73277 Owen/Teck (DE)
(72) Erfinder: Eder, Alexander, 86928 Hofstetten (DE); Bristle, Matthias, 73249 Wernau (DE)
(74) Vertreter: Ruckh, Rainer Gerhard

(57) **Zusammenfassung**

Die Erfindung betrifft eine Überwachungseinrichtung (100) mit Sensormitteln, mittels derer eine Schutzfeldüberwachung an einer Anlage durchgeführt wird, wobei abhängig von Sensorsignalen der Sensormittel eine Sicherheitsfunktion ausgelöst wird, wobei mit der Sicherheitsfunktion die Anlage in einen sicheren Zustand überführt ist. Mit den Sensormitteln werden zwei Schutzfelder (9) überwacht, die gegenüberliegend in Abstand zueinander angeordnet sind, wobei der maximale Abstand zwischen den Schutzfeldern (9) kleiner oder gleich der Größe eines kleinsten zu detektierenden Objekts (O) ist. Die Sicherheitsfunktion wird nur dann ausgelöst, wenn in beiden Schutzfeldern (9) gleichzeitig ein Objekt registriert wird.

## Beschreibung

Die Erfindung betrifft eine Überwachungseinrichtung.

Derartige Überwachungseinrichtungen werden insbesondere zur Gefahrenbereichsüberwachung an gefahrbringenden Anlagen eingesetzt. Ein Gefahrenbereich an einer solchen Anlage wird mit einem optischen Sensor überwacht, der allgemein als scannender Sensor derart ausgebildet ist, dass mit den Lichtstrahlen einer Sende-/Empfangseinheit dieses optischen Sensors periodisch ein Überwachungsbereich, insbesondere der Gefahrenbereich, abgetastet wird. Insbesondere kann der optische Sensor als Flächendistanzsensor, das heißt scannender Distanzsensor ausgebildet sein, mit welchen Positionen von Objekten im Überwachungsbereich bestimmt werden können.

Bei bekannten Überwachungseinrichtungen wird jeweils ein scannender optischer Sensor derart eingesetzt, dass mit diesem eine Objektüberwachung nicht im gesamten Überwachungsbereich, d.h. Gefahrenbereich, sondern nur innerhalb eines vorgegebenen Schutzfelds am Zugangsbereich erfolgt. Das Schutzfeld ist als Parameter im optischen Sensor gespeichert, wobei deren Dimension an den zu überwachenden Gefahrenbereich bestmöglich angepasst wird.

Die Auswertung der mit dem optischen Sensor generierten Messdaten erfolgt im optischen Sensor. Hierzu ist im optischen Sensor eine Auswerteeinheit integriert, die die am Ausgang eines Empfängers der Sende-/Empfangseinheit anstehenden Empfangssignale auswertet. Dabei wird ein binäres Objektfeststellungsignal generiert, dessen Schaltzustände angeben, ob sich innerhalb des Schutzfeldes ein Objekt befindet.

Dieses Objektfeststellungsignal wird an eine Steuerung, insbesondere eine Sicherheitssteuerung ausgegeben, die die Anlage steuert. Wird ein Objektfeststellungsignal ausgegeben, das signalisiert, dass kein Objekt im Schutzfeld vorhanden ist, wird der Betrieb der Anlage frei gegeben. Generiert der optische Sensor ein Objektfeststellungsignal mit dem Schaltzustand, der einer Objektdetektion im Schutzfeld entspricht, wird durch dieses Objektfeststellungsignal die Anlage mittels der Steuerung stillgesetzt, um Gefahrenzustände zu vermeiden.

Für den Einsatz im Bereich der Sicherheitstechnik, insbesondere im Bereich des Personenschutzes, weist der optische Sensor, insbesondere der Flächendistanzsensor der Überwachungseinrichtung, einen fehlersicheren Aufbau auf, um die normativen sicherheitstechnischen Anforderungen zu erfüllen, d.h. der optische Sensor ist ein Sicherheitssensor. Hierzu weist insbesondere die Auswerteeinheit einen mehrkanaligen Aufbau auf, beispielsweise in Form zweier sich zyklisch überwachender Rechnereinheiten.

Mit der Erfüllung dieser sicherheitstechnischen Anforderungen kann die Verfügbarkeit der Überwachungseinrichtung unnötig eingeschränkt sein. Beispielsweise kann durch umherfliegende Störpartikel, wie Staub, Späne oder dergleichen, kurzfristig vom optischen Sensor ein Objekteingriff im Schutzfeld gemeldet werden, was zur Auslösung der Sicherheitsfunktion führt und damit unnötig zu einem unnötigen Stillstand der Anlage

Derartige unnötige Stillstände können prinzipiell dadurch vermieden werden, dass für die Generierung des Schaltsignals höhere Integrationszeiten vorgegeben werden, d.h. im optischen Sensor erfolgt eine Mitteilung über eine Vielzahl von Messwerten, um so kurzfristiger Störungen herauszumitteln, so dass diese die Generierung des Schaltsignals nicht mehr beeinflussen.

Damit aber vergrößert sich die Reaktionszeit bei der Generierung des Schaltsignals, was bei vielen Applikationen nicht akzeptabel ist.

Der Erfindung liegt die Aufgabe zugrunde, ein hohes Sicherheitsniveau für eine Überwachungseinrichtung der eingangs genannten Art, bei gleichzeitig hoher Verfügbarkeit, zu realisieren.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft eine Überwachungseinrichtung mit Sensormitteln, mittels derer eine Schutzfeldüberwachung an einer Anlage durchgeführt wird, wobei abhängig von Sensorsignalen der Sensormittel eine Sicherheitsfunktion ausgelöst wird. Mit den Sensormitteln werden zwei Schutzfelder überwacht, die gegenüberliegend in Abstand zueinander angeordnet sind, wobei der maximale Abstand zwischen den Schutzfeldern kleiner oder gleich der Größe eines kleinsten zu detektierenden Objekts ist. Die Sicherheitsfunktion wird nur dann ausgelöst, wenn in beiden Schutzfeldern gleichzeitig ein Objekt registriert wird.

Mit der Sicherheitsfunktion wird die Anlage in einen sicheren Zustand überführt, in welchem keine Gefahren für Personen von der Anlage ausgehen. Insbesondere wird mit der Sicherheitsfunktion die Anlage stillgesetzt.

Mit der erfindungsgemäßen Überwachungseinrichtung wird ein hohes Sicherheitsniveau für eine Überwachung eines Gefahrenbereichs an einer Anlage erzielt, ohne die Verfügbarkeit der Anlage unnötig einzuschränken.

Dies wird erfindungsgemäß dadurch erreicht, dass mit den Sensormitteln simultan zwei Schutzfelder überwacht werden, wobei die Schutzfelder gegenüberliegend in Abstand zueinander angeordnet sind. Besonders vorteilhaft sind die Schutzfelder parallel in Abstand zueinander angeordnet. Weiter vorteilhaft sind die Schutzfelder identisch ausgebildet.

Mit den dicht beieinanderliegenden Schutzfeldern wird ein dreidimensionaler Bereich überwacht, wodurch eine umfangreiche, sichere Überwachungsfunktion erzielt wird.

Wesentlich hierbei ist, dass der maximale Abstand zwischen den Schutzfeldern kleiner oder gleich der Größe des kleinsten zu detektierenden Objekts ist, und dass die Sicherheitsfunktion, d.h. insbesondere das Stillsetzen der überwachten Anlage, nur dann ausgelöst wird, wenn in beiden Schutzfeldern gleichzeitig ein Objekt registriert wird.

Um eine sichere Überwachungsfunktion zu gewährleisten, ist es erforderlich, dass dann, wenn eine Person die Schutzfelder in Richtung des Gefahrenbereichs der Anlage passiert, eine Sicherheitsfunktion ausgelöst wird, mit der insbesondere die Anlage stillgesetzt wird.

Dies wird dadurch erreicht, dass das kleinste zu detektierende Objekt ein Körperteil einer Person ist, beispielsweise ein Bein oder ein Finger.

Aufgrund des an dieses kleinste Objekt angepassten Maximalabstands der Schutzfelder ist gewährleistet, dass dann, wenn eine Person die Schutzfelder passiert, gleichzeitig ein Objekteingriff in beiden Schutzfeldern in der Überwachungseinrichtung registriert wird, wodurch die Sicherheitsfunktion ausgelöst wird und keine Gefährdungen für die Person auftreten können. Die erfindungsgemäße Überwachungseinrichtung gewährleistet somit ein hohes Sicherheitsniveau.

Weiterhin wird trotz des hohen Sicherheitsniveaus eine hohe Verfügbarkeit der überwachten Anlage realisiert.

Dies beruht darauf, dass nichtsicherheitskritische Objekte, wie umherfliegende Kleinteile, Späne und dergleichen erheblich kleiner sind als der Abstand zwischen den Schutzfeldern und sich zudem entlang zufälliger Bahnen unkontrolliert bewegen. Daher ist die Wahrscheinlichkeit verschwindend gering, dass derartige Kleinteile und dergleichen zeitgleich in beide Schutzfelder eindringen. Damit wird durch die erfindungsgemäße Anordnung der Schutzfelder und die erfindungsgemäße Auswertung von Objekteingriffen in den Schutzfeldem eine unnötige Auslösung der Sicherheitsfunktion durch derartige umherfliegende Kleinteile und dergleichen vermieden und damit die Verfügbarkeit der überwachten Anlage erhöht.

Die erfindungsgemäße Überwachungseinrichtung weist als Sensormittel wenigstens einen Sicherheitssensor auf. Jeder Sicherheitssensor weist einen fehlersicheren Aufbau auf, der die Anforderungen der relevanten Normen im Bereich der Sicherheitstechnik erfüllt.

Gemäß einer ersten Variante sind die Sensormittel von zwei Flächendistanzsensoren gebildet, wobei jeder Flächendistanzsensor ein flächiges Schutzfeld überwacht.

Gemäß einer zweiten Variante sind die Sensormittel von einem Kamerasensor gebildet, mit welchem ein dreidimensionaler Erfassungsbereich überwacht wird, wobei zwei Ausschnitte des Erfassungsbereichs die Schutzfelder bilden.

In einer dritten Variante sind die Sensormittel von zwei Flächendistanzsensoren gebildet, wobei jeder Flächendistanzsensor ein flächiges Schutzfeld überwacht und sich diese beiden Flächendistanzsensoren in einem Gehäuse mit einer gemeinsamen Steuer- und sicheren Auswerteeinheit überwacht werden.

Dabei können die Schutzfelder Flächenbereiche oder Raumbereiche bilden.

In allen drei Fällen sind die Schutzfelder konfigurierbar.

Die Größen und Geometrien von Schutzfeldern können insbesondere durch Parameter vorgegeben werden, die in den Sensormitteln gespeichert sind oder in diese eingelesen werden.

Alle vorgenannten Varianten von Sicherheitssensoren bilden im Sinne der relevanten Sicherheitsnormen AOPDDR (active opto-electronic profective device responsive to diffuse reflection), d.h. tastende Sensorsysteme.

Generell können auch Sicherheitssensoren in Form von AOPD (active opto-electronic profective device) eingesetzt werden, d.h. optische Sensoren, die Objekte durch Strahlunterbrechungen detektieren. Beispiele hierfür sind Lichtvorhänge.

Gemäß einer vorteilhaften Ausführungsform weist die Überwachungseinrichtung zwei Ausgänge auf, wobei jeder Ausgang einem der beiden Schutzfelder zugeordnet ist. Über jeden Ausgang wird ein binäres Schaltsignal ausgegeben, wobei das Schaltsignal den Schaltzustand FALSE übernimmt, wenn im zugeordneten Schutzfeld ein Objekteingriff registriert wird. Das Schaltsignal nimmt den Schaltzustand TRUE ein, wenn im zugeordneten Schutzfeld kein Objekt registriert wird.

Dabei werden die Schaltsignale logisch verknüpft und abhängig von der logischen Verknüpfung wird die Sicherheitsfunktion ausgelöst.

Die logische Verknüpfung ist derart, dass die Sicherheitsfunktion nur dann ausgelöst wird, wenn beide Schaltsignale den einen Objekteingriff signalisierenden Schaltzustand FALSE einnehmen.

Gemäß einer vorteilhaften Weiterbildung wird das Schaltsignal für ein Schutzfeld nach einem Objekteingriff in diesem Schutzfeld vom Schaltzustand FALSE auf den Schaltzustand TRUE zurückgesetzt, wenn innerhalb eines Zeitintervalls ΔT nach diesem Objekteingriff das Schaltsignal für das andere Schutzfeld nicht vom Schaltzustand TRUE auf den Schaltzustand FALSE wechselt.

Dadurch kann die Verfügbarkeit der mit der Überwachungseinrichtung überwachten Anlage weiter erhöht werden.

Wenn nur in einem Schutzfeld ein Objekteingriff erfolgt und innerhalb des folgenden Zeitintervalls ΔT kein Objekteingriff im weiteren Schutzfeld erfolgt, liegt mit hoher Sicherheit kein sicherheitskritischer Objekteingriff in den Schutzfeldern vor, d.h. es wird keine Sicherheitsfunktion ausgelöst. Damit ein zweiter, mit dem ersten Objekteingriff unkorrelierter Objekteingriff, innerhalb des Zeitintervalls nicht zu einem nötigen Auslösen der Sicherheitsfunktion führt, wird der Schaltzustand des ersten Schutzfelds nach Ablauf des Zeitintervalls zurückgesetzt, d.h. auf TRUE gesetzt, so dass dann von neuem ausgehend eine neue Objektdetektion in den beiden Schutzfeldern im objektfreien Zustand erfolgen kann.

Die Nachweissicherheit der Überwachungseinrichtung und auch die Verfügbarkeit der mit der Überwachungseinrichtung überwachten Anlage kann vorteilhaft dadurch erhöht werden, dass jedes Schutzfeld in Schutzfeldsegmente unterteilt ist. Die Sicherheitsfunktion wird nur dann ausgelöst, wenn in korrespondierenden, gegenüberliegenden Schutzfeldsegmenten beider Schutzfelder ein Objekteingriff registriert wird.

Dabei sind vorteilhaft die Schutzfelder und deren Einteilung in Schutzfeldsegmente identisch ausgebildet.

Durch die Einteilung der beiden Schutzfelder in einzelne Schutzfeldsegmente wird eine ortsaufgelöste Objektdetektion in jedem Schutzfeld ermöglicht, indem ausgewertet wird, in welchem Schutzfeldsegment eines Schutzfelds ein Objekteingriff erfolgt.

Damit können sicherheitskritische Objekteingriffe in den Schutzfeldern, beispielsweise durch Personen, noch sicherer von nicht sicherheitskritischen Objekteingriffen, beispielsweise durch umherfliegende Kleinteile, unterschieden werden.

Eine Person bewegt sich entlang einer definierten Bahn durch die Schutzfelder, so dass dadurch Objekteingriffe in korrespondierenden, gegenüberliegenden Schutzfeldsegmenten der Schutzfelder registriert werden, was zur Auslösung der Sicherheitsfunktion führt.

Da sich demgegenüber Kleinteile stochastisch im Raum bewegen, werden durch diese, falls überhaupt, in beiden Schutzfeldern Objekteingriffe in entfernt liegenden Schutzfeldsegmenten generiert, was nicht zur Auslösung der Sicherheitsfunktion führt.

Gemäß einer ersten Ausgestaltung der erfindungsgemäßen Überwachungseinrichtung weisen die Sensormittel die Ausgänge auf. Die Generierung der Schaltsignale erfolgt in den Sensormitteln.

In diesem Fall erfolgt die Auswertung, ob Objekteingriffe in den Schutzfeldern vorliegen, in den Sensormitteln selbst.

Vorteilhaft erfolgt die logische Verknüpfung der Schaltsignale in den Sensormitteln oder in einer Sicherheitssteuerung.

Dies ist zweckmäßig, da die Sicherheitssteuerung vorteilhaft die zu überwachende Anlage steuert, so dass abhängig vom Ergebnis der logischen Verknüpfung die Sicherheitssteuerung den Betrieb der Anlage freigeben kann oder eine Sicherheitsfunktion auslöst, mit der die Anlage stillgesetzt wird.

Gemäß einer zweiten Ausgestaltung der erfindungsgemäßen Überwachungseinrichtung werden in den Sensormitteln generierte Messwerte in eine Sicherheitssteuerung eingelesen, in der die Schaltsignale generiert werden. Die Messwerte sind vorteilhaft Distanzwerte.

Insbesondere erfolgt die logische Verknüpfung der Schaltsignale in der Sicherheitssteuerung.

In diesem Fall erfolgt die Auswertung von Objekteingriffen in den Schutzfeldern in der Sicherheitssteuerung und damit auch die logische Verknüpfung der dadurch generierten Schaltsignale.

Bei dieser Variante sind vorteilhaft die Schutzfelder in den Koordinatensystemen der Sensormittel in der Sicherheitssteuerung abgespeichert, wobei in diesen Objekteingriffe festgestellt werden.

Um die Ergebnisse beider Schutzfeld-Auswertungen direkt in Beziehung setzen zu können insbesondere dann, wenn die Schutzfelder in Schutzfeldsegmente unterteilt sind, die Schutzfelder durch eine Koordinatentransformation in ein globales Koordinatensystem umgerechnet werden.

Dann wird im globalen Koordinatensystem festgestellt, ob Objekteingriffe in korrespondierenden Schutzfeldsegmenten der Schutzfelder vorliegt.

Die Erfindung wird im Folgenden anhand der Zeichnungen erläutert. Es zeigen:
- Figur 1:: Ausführungsbeispiel der erfindungsgemäßen Überwachungseinrichtung.
- Figur 2a:: Erstes Beispiel einer Schutzfeldüberwachung mit Sensormitteln der Überwachungseinrichtung gemäß Figur 1.
- Figur 2b:: Zweites Beispiel einer Schutzfeldüberwachung mit Sensormitteln der Überwachungseinrichtung gemäß Figur 1.
- Figur 3:: Erstes Beispiel eines Sicherheitssensors für die Überwachungseinrichtung gemäß Figur 1.
- Figur 4:: Zweites Beispiel eines Sicherheitssensors für die Überwachungseinrichtung gemäß Figur 1.

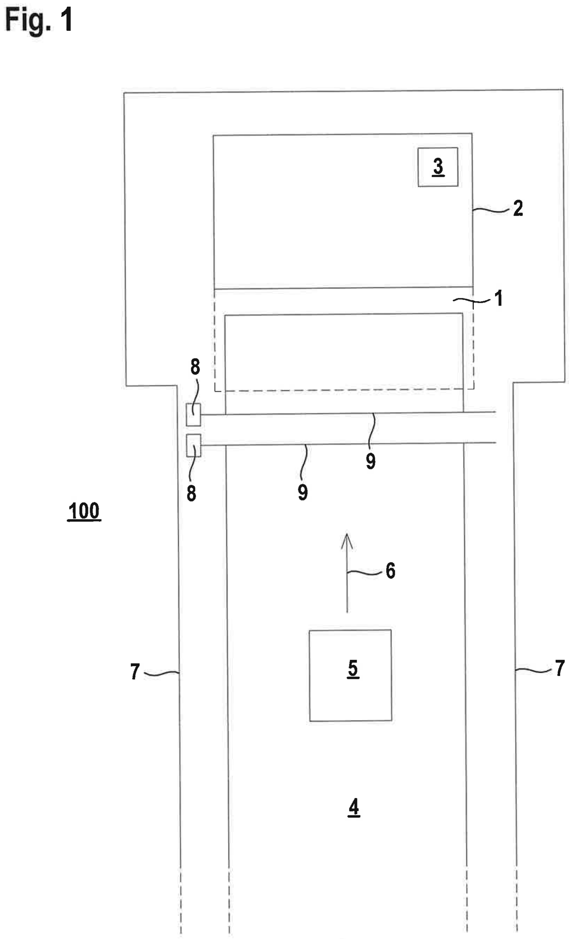

Figur 1 zeigt ein Ausführungsbeispiel der erfindungsgemäßen Überwachungseinrichtung 100. Mit der Überwachungseinrichtung 100 wird ein Zugang zu einem Gefahrenbereich 1 einer Anlage 2 überwacht. Die Anlage 2 wird von einer Sicherheitssteuerung 3 gesteuert. Die Sicherheitssteuerung 3 weist einen fehlersicheren Aufbau auf, beispielsweise in Form von einer mehrkanaligen Rechnerstruktur.

Im Bereich des Zugangs befindet sich eine Fördereinheit 4 zum Transport von Gegenständen 5, die in einer Förderrichtung 6 der Anlage 2 zuzuführen sind. Die Fördereinheit 4 ist seitlich durch eine Umzäunung 7 geschützt, die auch die Anlage 2 umgibt.

Zur Überwachung des Zugangs weist die Überwachungseinrichtung 100 Sensormittel auf, die im vorliegenden Fall von zwei identischen Flächendistanzsensoren 8 gebildet sind.

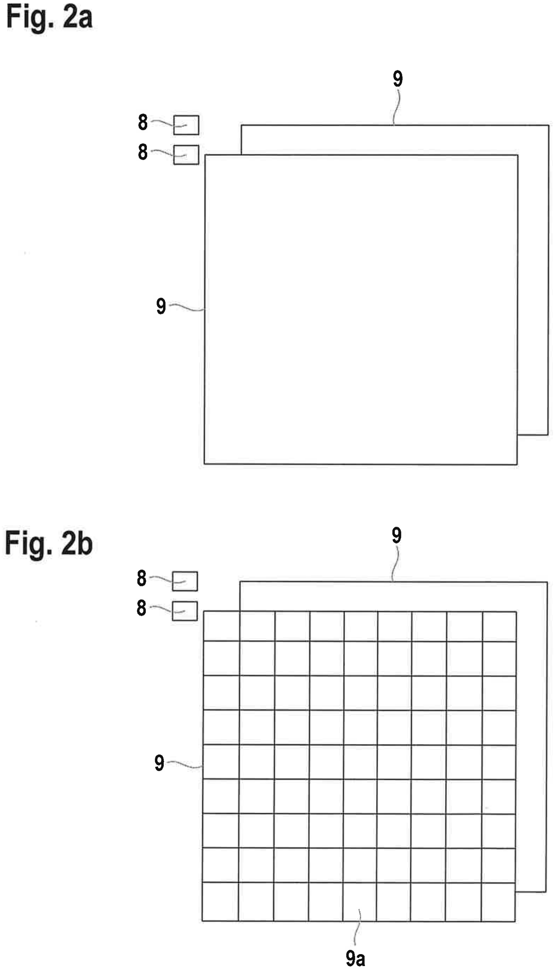

Mit jedem Flächendistanzsensor 8 wird ein Schutzfeld 9 überwacht, wobei unterschiedliche Ausführungsformen in den Figuren 2a, 2b dargestellt sind.

Im vorliegenden Fall verlaufen die Schutzfelder 9 in vertikalen Ebenen und erstrecken sich über den gesamten Zugangsbereich. Generell können die Schutzfelder 9 entsprechend der jeweiligen Applikation auch in horizontalen oder geneigten Ebenen orientiert sein.

Die Schutzfelder 9 sind gegenüberliegend so angeordnet, dass der maximale Abstand der Schutzfelder 9 zueinander kleiner oder gleich der Größe des kleinsten zu detektierenden Objekts O ist.

Das kleinste zu detektierende Objekt 0 ist insbesondere von einem Körperteil einer Person, z.B. einem Bein oder einem Finger gebildet.

Im vorliegenden Fall verlaufen die identisch ausgebildeten Schutzfelder 9 parallel in Abstand zueinander.

Bei der Ausführungsform der Figur 2b ist jedes Schutzfeld 9 in Schutzfeldsegmente 9a unterteilt. Die Unterteilung ist für beide Schutzfelder 9 identisch.

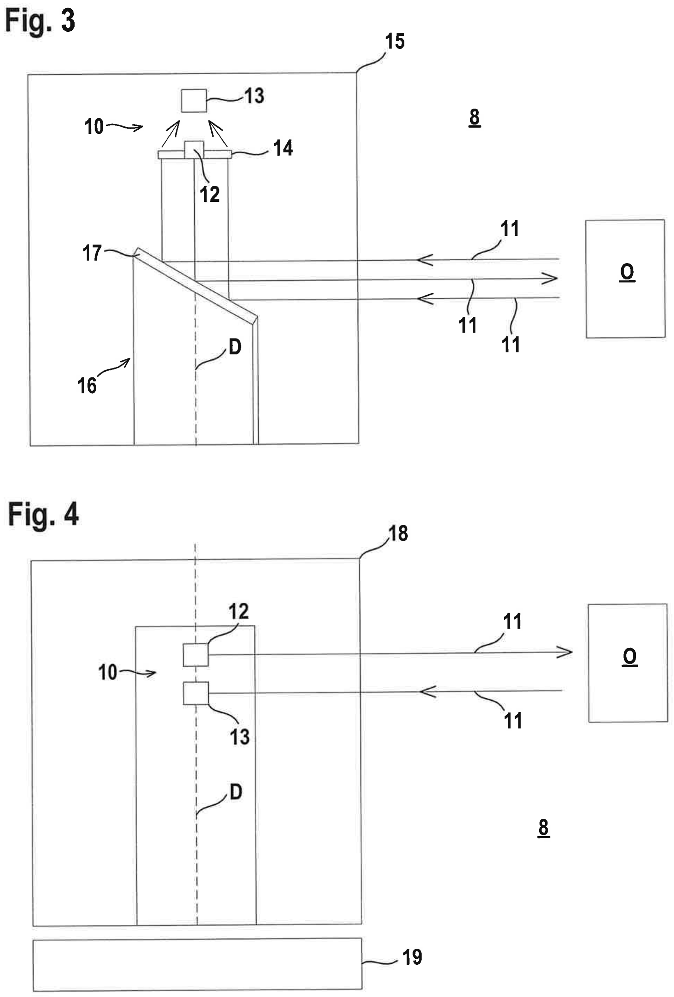

Figur 3 zeigt ein erstes Ausführungsbeispiel des Flächendistanzsensors 8 in Form eines optischen Sensors.

Der Flächendistanzsensor 8 weist eine Sende-/Empfangseinheit 10 mit einem Lichtstrahlen 11 emittierenden Sender 12 und einem Lichtstrahlen 11 empfangenden Empfänger 13 auf. Der Sender 12 ist zum Beispiel von einer Laserdiode gebildet, der Empfänger 13 ist zum Beispiel von einer Photodiode gebildet. Dem Empfänger 13 ist eine Empfangsoptik 14 zugeordnet. Die Sende-/Empfangseinheit 10 ist stationär in einem Gehäuse 15 integriert.

Ebenfalls im Gehäuse 15 ist eine Ablenkeinheit 16 vorgesehen, die einen motorisch getriebenen, um eine Drehachse D drehbaren Umlenkspiegel 17 aufweist. Die vom Sender 12 emittierten Lichtstrahlen 11 und die von einem zu detektierenden Objekt O zurückreflektierten Lichtstrahlen 11 werden über den Umlenkspiegel 17 geführt. Durch die Drehbewegung des Umlenkspiegels 17 werden die Lichtstrahlen 11 periodisch im Überwachungsbereich geführt. Mittels eines Winkelgebers wird die aktuelle Drehstellung des Umlenkspiegels 17 und somit die aktuelle Strahlenrichtung der Lichtstrahlen 11 erfasst.

Im vorliegenden Fall bildet die Sende-/Empfangseinheit 10 einen nach einem Puls-Laufzeit-Verfahren arbeitenden Distanzsensor. Der Sender 12 emittiert daher Folgen von Lichtimpulsen. Zur Distanzbestimmung wird die Lichtlaufzeit jeweils eines Lichtimpuls vom Sender 12 zu einem Objekt O und zurück zum Empfänger 13 ermittelt. Alternativ können Distanzmessungen nach einem Phasenmessverfahren durchgeführt werden.

Figur 4 zeigt eine zweite Ausführungsform des Flächendistanzsensors 8. In diesem Fall ist eine Sende-/Empfangseinheit 10 mit einem Lichtstrahlen 11 emittierenden Sender 12 und einem Lichtstrahlen 11 empfangenden Empfänger 13 in einem rotierenden Messkopf 18 angeordnet. Der um eine Drehachse D drehbare, und auf einem feststehenden Sockel 19 gelagerte Messkopf 18 bewirkt in diesem Fall die periodische Ablenkung der Lichtstrahlen 11 im Überwachungsbereich. Ansonsten entspricht der optische Sensor gemäß Figur 4 der Ausführungsform gemäß Figur 3.

Mit dem Flächendistanzsensor 8 wird ein zweidimensionaler Erfassungsbereich erfasst. Hierzu wird der Erfassungsbereich periodisch in einzelnen Scans mit den Lichtstrahlen 11 abgetastet. Dementsprechend erfolgt mit dem Sicherheitssensor 4 eine Schutzfeldüberwachung in zweidimensionalen Schutzfeldern 9.

Jeder Flächendistanzsensor 8 der Überwachungseinrichtung 100 bildet einen Sicherheitssensor.

Der als Sicherheitssensor ausgebildete Flächendistanzsensor 8 weist generell eine Auswerteeinheit auf, in der Empfangssignale des Empfängers 13 ausgewertet werden. Dabei erfolgt generell eine Schutzfeldüberwachung derart, dass in der Auswerteeinheit überprüft wird, ob im Schutzfeld 9 ein Objekt O vorhanden ist oder nicht. Abhängig hiervon generiert die Auswerteeinheit als Objektfeststellungssignal ein binäres Schaltsignal dessen Schaltzustände angeben, ob sich ein Objekt O im Schutzfeld 9 befindet oder nicht. Wird im Schutzfeld 9 kein Objekt O registriert, nimmt das Schaltsignal den Schaltzustand TRUE an. Wird im Schutzfeld 9 ein Objekt O registriert, nimmt das Schaltsignal den Schaltzustand FALSE ein. Das Schaltsignal wird jeweils am Ende eines Scans neu generiert.

Zur Erfüllung der Anforderungen für einen Einsatz des Sicherheitssensors in sicherheitstechnischen Applikationen weist die Auswerteeinheit einen fehlersicheren Aufbau auf. Dies wird beispielsweise dadurch realisiert, dass die Auswerteeinheit aus zwei sich gegenseitig überwachenden Rechnereinheiten besteht.

Erfindungsgemäß wird bei der Überwachungseinrichtung 100 nur dann eine Sicherheitsfunktion ausgelöst, wenn in beiden Flächendistanzsensoren 8 gleichzeitig ein Objekt O im Schutzfeld 9 erkannt wird.

Hierzu werden die Schaltsignale der Flächendistanzsensoren 8 allgemein einer Auswerteschaltung, im vorliegenden Fall der Sicherheitssteuerung 3, zugeführt. Dort erfolgt eine ODER-Verknüpfung der Schaltsignale, so dass die Sicherheitsfunktion nur dann generiert wird, wenn die Schaltsignale beider Flächendistanzsensoren 8 gleichzeitig den Schaltzustand FALSE einnehmen.

Im vorliegenden Fall besteht die Sicherheitsfunktion darin, dass die Anlage 2 stillgesetzt wird.

Da mit zwei Flächendistanzsensoren 8 simultan zwei Schutzfelder 9 überwacht werden, wird ein hohes Sicherheitsniveau bei der Schutzfeldüberwachung erhalten.

Da die Schutzfelder 9 in einem Abstand kleiner oder gleich der maximalen zu detektierenden Objektgröße, vorgegeben durch Körperteile einer Person, zueinander angeordnet sind, ist gewährleistet, dass eine Person bei Durchschreiten der Schutzfelder 9 sicher von der Überwachungseinrichtung 100 erkannt wird, so dass die Sicherheitsfunktion ausgelöst wird und Gefährdungen der Person vermieden werden.

Zudem wird eine hohe Verfügbarkeit erhalten, da sporadische Störeffekte wie Detektionen, kleiner sich schnell bewegender Partikel, wie umherfliegende Späne und dergleichen, mit hoher Wahrscheinlichkeit nur bei einem der Flächendistanzsensor 8 eine Änderung des Schaltsignals vom Schaltzustand TRUE in den Schaltzustand FALSE bewirken, da die Partikel mit hoher Wahrscheinlichkeit nur in eines der Schutzfelder 9 eindringen. Da in der Sicherheitssteuerung 3 eine ODER-Verknüpfung der Schaltsignale erfolgt, führt dies nicht zu einer unnötigen Auslösung der Sicherheitsfunktion und damit auch nicht zu einem unnötigen Stillsetzen der Anlage 2.

Die Verfügbarkeit kann noch weiter dadurch erhöht werden, dass die Schutzfelder 9, wie in Figur 2b dargestellt, in die Schutzfeldsegmente 9a unterteilt sind.

In diesem Fall erfolgt die Schutzfeld-Auswertung derart, dass die Sicherheitsfunktion nur dann ausgelöst wird, wenn gleichzeitig in korrespondierenden, gegenüberliegenden Schutzfeldsegmenten 9a ein Objekteingriff registriert wird, was der Fall ist, wenn die Person die Schutzfelder 9 passiert.

Demgegenüber führen zufällige Objekteingriffe durch umherfliegende Späne in beiden Schutzfeldern 9 nicht zur Auslösung der Sicherheitsfunktion, da diese Objekteingriffe unkorreliert und damit mit hoher Wahrscheinlichkeit nicht in korrespondierenden Schutzfeldsegmenten 9a erfolgen.

Schließlich kann die Verfügbarkeit noch weiter dadurch erhöht werden, dass das Schaltsignal für ein Schutzfeld nach einem Objekteingriff in diesem Schutzfeld vom Schaltzustand FALSE auf den Schaltzustand TRUE zurückgesetzt wird, wenn innerhalb eines Zeitintervalls ΔT nach diesem Objekteingriff das Schaltsignal für das andere Schutzfeld nicht vom Schaltzustand TRUE auf den Schaltzustand FALSE wechselt.

Generell kann die Schutzfeld-Auswertung auch in die Sicherheitssteuerung 3 verlagert werden. In diesem Fall übertragen die Flächendistanzsensoren 8 nur die Distanzmesswerte an die Sicherheitssteuerung 3.

Vorteilhaft sind die Messwerte von Distanz- oder Positionswerten gebildet.

Weiter vorteilhaft sind die Schutzfelder 9 in den Koordinatensystemen der Sensormittel in der Sicherheitssteuerung 3 abgespeichert, wobei in diesen Objekteingriffe festgestellt werden.

Dann werden die Schutzfelder 9 durch eine Koordinatentransformation in ein globales Koordinatensystem umgerechnet.

### Bezugszeichenliste

- (1): Gefahrenbereich
- (2): Anlage
- (3): Sicherheitssteuerung
- (4): Fördereinheit
- (5): Gegenstand
- (6): Förderrichtung
- (7): Umzäunung
- (8): Flächendistanzsensor
- (9): Schutzfeld
- (9a): Schutzfeldsegment
- (10): Sende-/Empfangseinheit
- (11): Lichtstrahl
- (12): Sender
- (13): Empfänger
- (14): Empfangsoptik
- (15): Gehäuse
- (16): Ablenkeinheit
- (17): Umlenkspiegel
- (18): Messkopf
- (19): Sockel
- (100): Überwachungseinrichtung

- (D): Drehachse
- (O): Objekt

## Patentansprüche

1. Überwachungseinrichtung (100) mit Sensormitteln, mittels derer eine Schutzfeldüberwachung an einer Anlage durchgeführt wird, wobei abhängig von Sensorsignalen der Sensormittel eine Sicherheitsfunktion ausgelöst wird, wobei mit der Sicherheitsfunktion die Anlage in einen sicheren Zustand überführt ist, **dadurch gekennzeichnet, dass** mit den Sensormitteln zwei Schutzfelder (9) überwacht werden, die gegenüberliegend in Abstand zueinander angeordnet sind, wobei der maximale Abstand zwischen den Schutzfeldern (9) kleiner oder gleich der Größe eines kleinsten zu detektierenden Objekts (O) ist und dass die Sicherheitsfunktion nur dann ausgelöst wird, wenn in beiden Schutzfeldern (9) gleichzeitig ein Objekt (O) registriert wird.

2. Überwachungseinrichtung (100) nach Anspruch 1, **dadurch gekennzeichnet, dass** mit den Sensormitteln zwei parallel in Abstand zueinander orientierte Schutzfelder (9) überwacht werden.

3. Überwachungseinrichtung (100) nach einem der Ansprüche 1 oder 2, **dadurch gekennzeichnet, dass** die Sensormittel von zwei Flächendistanzsensoren (8) gebildet sind, wobei jeder Flächendistanzsensor (8) ein flächiges Schutzfeld (9) überwacht, oder dass die Sensormittel von einem Kamerasensor gebildet sind, mit welchem ein dreidimensionaler Erfassungsbereich überwacht wird, wobei zwei Ausschnitte des Erfassungsbereichs die Schutzfelder (9) bilden.

4. Überwachungseinrichtung (100) nach Anspruch 3, **dadurch gekennzeichnet, dass** die Schutzfelder (9) Flächenbereiche oder Raumbereiche bilden, und/oder dass die Schutzfelder (9) konfigurierbar sind.

5. Überwachungseinrichtung (100) nach einem der Ansprüche 1 bis 4, **dadurch gekennzeichnet, dass** die Sensormittel von Sicherheitssensoren gebildet sind.

6. Überwachungseinrichtung (100) nach einem der Ansprüche 1 bis 5, **dadurch gekennzeichnet, dass** diese zwei Ausgänge aufweist, wobei jeder Ausgang einem der beiden Schutzfelder (9) zugeordnet ist, und wobei über jeden Ausgang ein binäres Schaltsignal ausgegeben wird, wobei das Schaltsignal den Schaltzustand FALSE übernimmt, wenn im zugeordneten Schutzfeld (9) ein Objekteingriff registriert wird, und das Schaltsignal den Schaltzustand TRUE einnimmt, wenn im zugeordneten Schutzfeld (9) kein Objekt (O) registriert wird.

7. Überwachungseinrichtung (100) nach Anspruch 6, **dadurch gekennzeichnet, dass** die Schaltsignale logisch verknüpft werden und dass abhängig von der logischen Verknüpfung die Sicherheitsfunktion ausgelöst wird.

8. Überwachungseinrichtung (100) nach Anspruch 7, **dadurch gekennzeichnet, dass** die Sicherheitsfunktion nur dann ausgelöst wird, wenn beide Schaltsignale den einen Objekteingriff signalisierenden Schaltzustand FALSE einnehmen.

9. Überwachungseinrichtung (100) nach einem der Ansprüche 6 bis 8, **dadurch gekennzeichnet, dass** das Schaltsignal für ein Schutzfeld (9) nach einem Objekteingriff in diesem Schutzfeld (9) vom Schaltzustand FALSE auf den Schaltzustand TRUE zurückgesetzt wird, wenn innerhalb eines Zeitintervalls ΔT nach diesem Objekteingriff das Schaltsignal für das andere Schutzfeld (9) nicht vom Schaltzustand TRUE auf den Schaltzustand FALSE wechselt.

10. Überwachungseinrichtung (100) nach einem der Ansprüche 1 bis 9, **dadurch gekennzeichnet, dass** jedes Schutzfeld (9) in Schutzfeldsegmente (9a) unterteilt ist, und dass die Sicherheitsfunktion nur dann ausgelöst wird, wenn in korrespondierenden, gegenüberliegenden Schutzfeldsegmenten (9a) beider Schutzfelder (9) ein Objekteingriff registriert wird.

11. Überwachungseinrichtung (100) nach Anspruch 10, **dadurch gekennzeichnet, dass** die Schutzfelder (9) und deren Einteilung in Schutzfeldsegmente (9a) identisch ausgebildet sind.

12. Überwachungseinrichtung (100) nach einem der Ansprüche 6 bis 11, **dadurch gekennzeichnet, dass** die Sensormittel die Ausgänge aufweisen, und dass die Generierung der Schaltsignale in den Sensormitteln erfolgt, oder dass in den Sensormitteln generierte Messwerte in eine Sicherheitssteuerung (3) eingelesen werden, in der die Schaltsignale generiert werden.

13. Überwachungseinrichtung (100) nach Anspruch 12, **dadurch gekennzeichnet, dass** die Schutzfelder (9) in den Koordinatensystemen der Sensormittel in der Sicherheitssteuerung (3) abgespeichert sind, wobei in diesen Objekteingriffe festgestellt werden.

14. Überwachungseinrichtung (100) nach Anspruch 13, **dadurch gekennzeichnet, dass** die Schutzfelder (9) durch eine Koordinatentransformation in ein globales Koordinatensystem umgerechnet werden, wobei im globalen Koordinatensystem festgestellt wird, ob Objekteingriffe in korrespondierenden Schutzfeldsegmenten (9a) der Schutzfelder (9) vorliegen.

15. Überwachungseinrichtung (100) nach einem der Ansprüche 1 bis 14, **dadurch gekennzeichnet, dass** die Sensormittel in einem gemeinsamen Gehäuse (15) integriert sind und mit einer Steuer- und Auswerteeinheit verbunden sind.
